# EUROPÄISCHE PATENTSCHRIFT

(11) **EP 0 586 798 B1**
(45) Veröffentlichungstag und Bekanntmachung des Hinweises auf die Patenterteilung: **04.02.1998**
(21) Anmeldenummer: 93109263.9
(22) Anmeldetag: 09.06.1993
(51) Int. Cl.: B01D 46/24, B01D 46/44

(54) **Vorrichtung zum Filtern von heissen, staubbeladenen Gasen**
Device for filtering hot dust loaden gases
Dispositif pour filtrer des gaz chauds chargés de poussières

(30) Priorität: 07.08.1992 DE 4226146
(43) Veröffentlichungstag der Anmeldung: 16.03.1994
(73) Patentinhaber: Deutsche Babcock Energie- und Umwelttechnik Aktiengesellschaft, 46049 Oberhausen (DE)
(72) Erfinder: Jelich, Werner, D-4630 Bochum 1 (DE); Rehwinkel, Heiko, Dr., D-4250 Bottrop (DE); Klauke, Friedrich, Dr., D-4030 Ratingen 1 (DE); König, Dieter, Dr., D-4324 Hattingen (DE); Kalthoff, Udo, Dr., D-4330 Mülheim/Ruhr (DE)
(74) Vertreter: Müller, Jürgen, Dipl.-Ing.

(56) Entgegenhaltungen:
- WO-A-87/07179
- DE-A- 2 606 146
- DE-A- 3 336 487
- DE-A- 3 938 264
- US-A- 4 491 458

## Beschreibung

Die Erfindung betrifft eine Vorrichtung zum Filtern von heißen, staubbeladenen Gasen mit Hilfe von hohlen Filterelementen nach dem Oberbegriff des Patentanspruches 1.

Aus der DE-PS 35 15 365 ist ein Heißgasfilter bekannt, bei dem Filterkerzen in einer Lochplatte aufgehängt sind, die das Filtergehäuse in einen Rohgasraum und einen Reingasraum aufteilt. Wenn bei einem solchen Heißgasfilter eine der Filterkerzen durch Bruch defekt wird, gelangt ungereinigtes Rohgas in das Reingas. Um unzulässig hohe Staub- und Schadstoffkonzentrationen im Reingas zu vermeiden, muß das gesamte Heißgasfilter stillgesetzt und die defekte Filterkerze ausgetauscht werden. Das führt zu unnötigen Produktionsausfällen.

Aus der DE-OS 39 38 264 und der EP-OS 04 33 637 ist es bekannt, die Filterkerzen innerhalb des Filtergehäuses gruppen- oder reihenweise einzelnen das Reingas führenden Sammelkanälen zuzuordnen. Diese Sammelkanäle, auf denen die keramischen Filterkerzen ruhen oder unter denen die Filterkerzen angeordnet sind, sind über den Querschnitt des Filtergehäuses verteilt und in einer oder mehreren Ebenen übereinander angeordnet. Die Sammelkanäle sind innerhalb oder außerhalb des Filtergehäuses mit Reingasleitungen verbunden. Auch bei diesen Heißgasfiltern ist keine Möglichkeit vorgesehen, um einem Störfall durch Bruch einer Filterkerze zu begegnen.

Zur Abreinigung der keramischen Filterkerzen innerhalb des Filtergehäuses des bekannten Heißgasfilters (EP-OS 04 33 637) wird in die Reingasleitung entgegen der Strömungsrichtung des Reingases ein Druckgas impulsartig eingeblasen. In diesem Zusammenhang ist weiterhin bekannt (US-PS 45 00 926), den Druck des Rohgases und des Reingases zu messen und daraus die sich über die Filterkerzen einstellende Druckdifferenz zu bestimmen. Überschreitet der aus diesen Meßwerten gebildete Wert einen vorgegebenen Betrag, so wird der Reinigungsimpuls für eine bestimmte Gruppe von Filterelementen ausgelöst. Während des Abreinigungsvorganges wird die betreffende Gruppe von Filterelemente von der Rohgaszufuhr abgesperrt. Bei einem anderen bekannten Verfahren (WO 88/07404) wird die den Abreinigungsvorgang auslösende Druckdifferenz durch eine Messung des Volumenstromes in der Reingassammelleitung überlagert. Auch diese Verfahren lassen keine Rückschlüsse auf den Zustand einer individuellen Gruppe von Filterelemente zu, weil der Druck und der Volumenstrom des Reingases in dem aus dem Filtergehäuse abgeführten Reingas insgesamt bestimmt werden.

Die in der WO 87/07179 beschriebene Filtervorrichtung weist eine Lochplatte auf, an der Filterkerzen aufgehängt sind, wobei die offenen Enden der Filterkerzen in den Reingassammelraum oberhalb der Lochoplatte münden. Jede einzelne Filterkerze wird einzeln überwacht, indem auf der Reingasseite der Staudruck bestimmt wird. Entsprechend der Höhe des Staudruckes wird die betreffende Filterkerze abgereinigt oder verschlossen. Diese Überwachung einer jeden Filterkerze ist an sich erstrebenswert, aber für große Filtervorrichtungen mit einer Vielzahl von Filterkerzen nicht durchführbar.

Der Erfindung liegt die Aufgabe zugrunde, in einer Vorrichtung zum Filtern von Gasen mit gruppenweise angeordneten Filterkerzen eine Einrichtung zur Überwachung zu schaffen, mit der ein Schaden an einer Filterkerze lokalisiert und der Eintritt von Rohgas in das Reingas vermieden werden kann.

Diese Aufgabe wird bei einer gattungsgemäßen Vorrichtung erfindungsgemäß durch die kennzeichnenden Merkmale des Patentanspruches 1 gelöst. Mehrere auf diesem Grundprinzip aufbauende Varianten sind Gegenstand der Unteransprüche.

Die Erfindung geht von dem Grundgedanken aus, daß, der Bruch einer Filterkerze sich in einer deutlichen Änderung der Reingaskonditionen bemerkbar macht. Sind, wie an sich bekannt, die Filterkerzen gruppenweise angeordnet und einzelnen Sammelkanälen zugeordnet, so läßt sich aufgrund dieser Änderung des Reingaszustandes diejenige Filterkerzengruppe lokalisieren, in der eine Filterkerze defekt ist. Weiterhin läßt sich die Anoderung der Reingaskonditionen dazu ausnutzen, die betreffende Filterkerzengruppe abzuschalten, im übrigen aber das gesamte Heißgasfilter ohne Unterbrechung bis zu einer fällig werdenden Inspektion weiter zu betreiben. Im Zuge dieser Inspektion können dann die defekten Filterkerzen ausgetauscht werden. Auf diese Weise werden unnötige Betriebsstillstände vermieden, ohne daß der Reinheitsgrad des Reingases beeinträchtigt wird.

Mehrere Ausführungsbeispiele der Erfindung sind in der Zeichnung dargestellt und werden im folgenden näher erläutert. Es zeigen:
Fig. 1 schematisch einen Längsschnitt durch eine Vorrichtung zum Filtern von Gasen mit verschiedenen Meßeinrichtungen und
Fig. 2 eine weitere Meßeinrichtung.

Die Vorrichtung zum Filtern von vorzugsweise heißen, staubbeladenen, unter Druck stehenden Gasen besteht aus einem Filtergehäuse 1 mit einem zylindrischen Mantel 2, einem gewölbten Deckel 3 und mit einem Trichter 4 im unteren Teil. Der Trichter 4 geht in einen Auslaßstutzen 5 über und dient zum Sammeln des abgeschiedenen Staubes. Das Filtergehäuse 1 ist mit einem Zuführungsstutzen 6 für das zu reinigende Rohgas versehen.

Innerhalb des Filtergehäuses 1 sind hohle Filterelemente angeordnet, die derart mit das Reingas führenden Sammelkanälen 8 verbunden sind, daß die Innenräume der Filterelemente mit dem Innenraum eines Sammelkanales 8 in Verbindung stehen. Als Filterelemente kommen Filterschläuche oder keramische als einseitig geschlossene Hohlkörper ausgebildete Filterkerzen 7 zur Anwendung. Jeder Sammelkanal 8 nimmt eine Gruppe von Filterkerzen 7 auf, die über entsprechend geformte Mundstücke auf dem Sammelkanal 8 aufstehen, oder unterhalb des Sammelkanals 8 aufgehängt sind. Die Sammelkanäle 8 sind in einer oder mehreren Ebenen übereinander und nebeneinander angeordnet. Die Sammelkanäle 8 können z. B. auf einem an dem Mantel 2 des Filtergehäuses 1 abgestützten Tragring aufliegen oder oberhalb der Filterkerzen 7 in dem Filtergehäuse 1 aufgehängt sein.

Jeder Sammelkanal 8 ist mit einer Abführungsleitung 9 verbunden, die einzeln durch das Filtergehäuse 1 nach außen geführt und dort an Sammler 10 angeschlossen sind. Die Sammler 10 sind mit Reingasleitungen 11 zur Abführung des Reingases in eine Reingassammelleitung 21 verbunden. In jeder Abführungsleitung 9 ist in dem außen liegenden Teil ein mit einem Antrieb 12 versehenes Absperrorgan 13 angeordnet.

Koaxial zu jeder Abführungsleitung 9 ist eine Abreinigungslanze 14 angeordnet. Die Abreinigungslanze 14 ist in den Sammler 10 hineingeführt und endet in einem vertikalen Abstand von der Einmündung der Abführungsleitung 9. Durch diese Abreinigungslanze 14 wird ein gasförmiges Abreinigungsmedium über die Abführungsleitung 9 in den Sammelkanal 8 mit einem vorgegebenen, den Rohgasdruck übersteigenden Druck eingeführt. Durch Zuführung des Abreinigungsmediums in den Innenraum der Filterkerzen 7 wird der Filterkuchen, der sich auf der Außenseite der Filterkerzen 7 gebildet hat, entfernt.

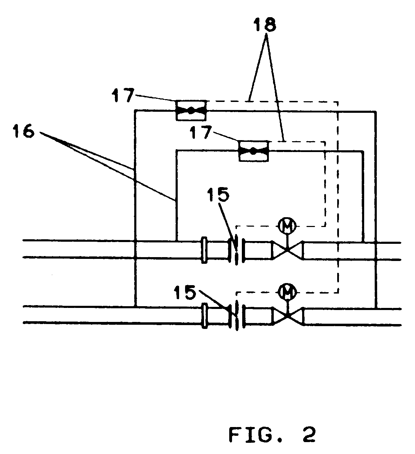

Wie in Fig. 2 als Einzelheit gezeigt ist, befindet sich in jeder Abführungsleitung 9 ein Gerät 15 z. B. eine Meßblende zur Bestimmung des Volumenstromes des die Abführungsleitung 9 durchströmenden Reingases. Ferner ist an die Abführungsleitung 9 zu beiden Seiten des Gerätes 15 eine Meßleitung 16 angeschlossen, die mit einem Gerät 17 zur Bestimmung der Druckdifferenz angeordnet ist. Die Geräte 15, 17 sind jeweils über eine Steuerleitung 18 mit dem Antrieb 12 des Absperrorgans 13 in der betreffenden Abführungsleitung 9 verbunden. Zeigen die Geräte 15, 17 eine unzulässige Anderung an, so ist dies ein Indiz dafür, daß eine oder mehrere der dieser Abführungsleitung 9 zugeordneten Filterkerzen 7 defekt sind. Die Steuerung kann so eingestellt werden, daß in einem solchen Fall der Antrieb 12 über die Steuerleitung 18 ein Signal erhält, das Absperrorgan 13 der betreffenden Abführungsleitung 9 zu schließen. Das Absperrorgan 13 kann bei Vorliegen des genannten Signals auch manuell geschlossen werden. Die Geräte 15, 17 können auch in den Reingasleitungen 11 angeordnet sein.

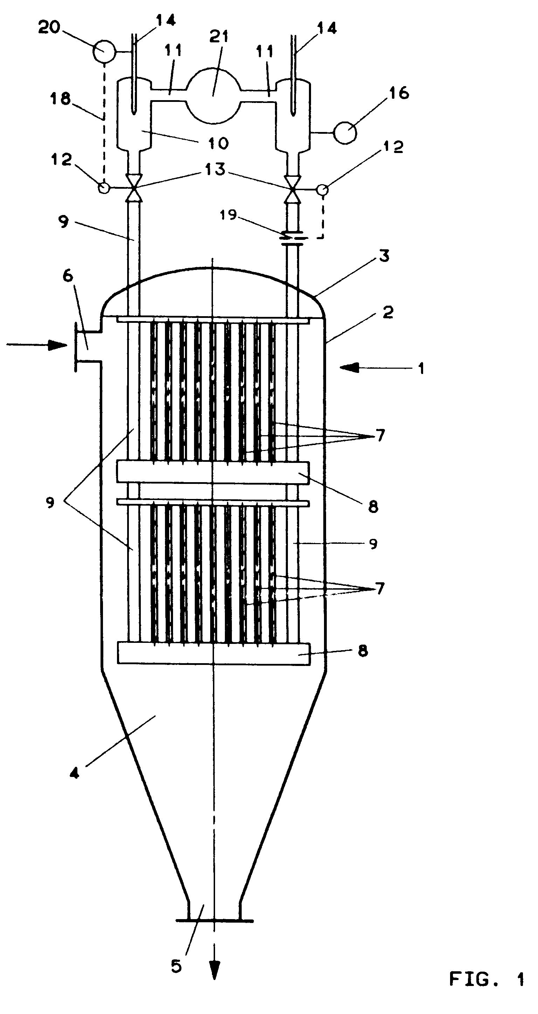

Eine weitere Größe, die etwas über den Zustand des Gases auf der Reingasseite in Verbindung mit einer defekt gewordenen Filterkerze 7 aussagt, ist der Staubgehalt. Wie für die in Fig. 1 rechts dargestellte Abführungsleitung 9 gezeigt ist, kann in jeder Abführungsleitung 9 oder in jeder Reingasleitung 11 in dem außerhalb des Filtergehäuses 1 liegenden Abschnitt ein Staubmeßgerät 19 angeordnet sein, das über eine Steuerleitung 18 mit dem Antrieb 12 des in der gleichen Abführungsleitung 9 liegenden Absperrorgans 13 verbunden ist. Registriert das Staubmeßgerät 19 einen über einen vorgegebenen Trübungsgrad hinausgehenden Staubgehalt, so ist das auf eine oder mehrere defekt gewordene Filterkerzen 7 zurückzuführen. In diesem Fall erhält der Antrieb 12 über die Steuerleitung 18 ein Signal, das zum Schließen des Absperrorgans 13 genutzt werden kann.

Eine weitere Vorrichtung, die der Lokalisierung eines Schadens an einer Gruppe von Filterkerzen 7 dient, nutzt den Staudruck auf der Reingasseite aus, indem an geeigneter Stelle in dem das Reingas führenden System eine Druckentnahme 20 zur Bestimmung des Staudruckes des Reingases angeordnet ist, z. B. in jeder Abführungsleitung 9 oder jedem Sammler 10. Vorzugsweise ist diese Druckentnahme 20 in die Abreinigungslanze 14 eingesetzt. Der Bruch einer Filterkerze 7 äußert sich in einer Änderung des Staudruckes des Reingases. Eine registrierte Änderung des Staudruckes ist somit ein Anzeichen dafür, daß eine oder mehrere der dieser Abreinigungslanze 14 zugeordneten Filterkerzen 7 defekt geworden sind. Wie im Zusammenhang mit den bereits beschriebenen Steuereinrichtungen erläutert ist, ist auch hier eine Steuerleitung 18 zu dem Antrieb 12 des Absperrorgans 13 in der Abführungsleitung 9. Weicht der Staudruck von einem vorgegebenen Wert ab, so kann das Absperrorgan 13 automatisch oder manuell geschlossen werden.

Wie bisher beschrieben, ist jeder Gruppe von Filterkerzen 7 jeweils nur ein Meßgerät z. B. die Geräte 15, 17 zur Bestimmung des Volumenstromes und der Druckdifferenz, oder das Staubmeßgerät 19, oder die Druckentnahme 20 zugeordnet. Um einen störungsfreien Filterbetrieb noch sicherer zu gewährleisten, können auch mehrere auf einem unterschiedlichen Prinzip beruhende Meßgeräte der gleichen Abführungsleitung 9 und/oder Reingasleitung 11 zugeordnet und über eine Auswahlschaltung mit dem Antrieb 12 des Absperrorgans 13 verbunden sein.

## Patentansprüche

1. Vorrichtung zum Filtern von heißen, staubbeladenen Gasen mit Hilfe von hohlen Filterelementen, die innerhalb eines Filtergehäuses (1) gruppenweise angeordnet sind, wobei jede Filtergruppe über eine Abführungsleitung (9) und eine Reingasleitung (11) mit einer außerhalb des Filtergehäuses (1) angeordneten Reingassammelleitung (21) verbunden ist und die Abführungsleitungen (9) einzeln aus dem Filtergehäuse (1) herausgeführt sind, dadurch gekennzeichnet, daß außerhalb des Filtergehäuses (1) in jeder Abführungsleitung (9) ein Absperrorgan (13) und in jeder Abführungsleitung (9) und/oder Reingasleitung (11) eine Meßeinrichtung zur Bestimmung der Reingaskonditionen angeordnet ist.

2. Vorrichtung nach Anspruch 1, dadurch gekennzeichnet, daß die Meßeinrichtung aus einem in der Abführungsleitung (9) und/oder Reingasleitung (11) angeordneten Gerät (15) zur Bestimmung des Volumenstromes besteht und daß zu beiden Seiten des Gerätes (15) an die Abführungsleitung (9) und/oder Reingasleitung (11) eine zu einem Gerät (17) zur Bestimmung der Druckdifferenz führende Meßleitung (16) angeschlossen ist.

3. Vorrichtung nach Anspruch 1, dadurch gekennzeichnet, daß die Meßeinrichtung aus einem in der Abführungsleitung (9) und/oder Reingasleitung (11) angeordneten Staubmeßgerät (19) zur Bestimmung des Staubgehaltes des Reingases besteht.

4. Vorrichtung nach Anspruch 1, dadurch gekennzeichnet, daß in Strömungsrichtung hinter den Filterelementen eine Druckmeßstelle (20) zur Bestimmung des Staudruckes des Reingases angeordnet ist.

5. Vorrichtung nach einem der Ansprüchen 1 bis 4, dadurch gekennzeichnet, daß das Absperrorgan (13) über die Meßeinrichtung zur Bestimmung der Reingaskonditionen gesteuert ist.

6. Vorrichtung nach den Ansprüchen 1 bis 5, dadurch gekennzeichnet, daß mehrere auf unterschiedlichen Meßprinzipien beruhende Meßeinrichtungen in der Zuführungsleitung (9) und/oder Reingasleitung (11) angeordnet und über eine Auswahlschaltung mit dem Absperrorgan (13) verbunden sind.

## Claims

1. Device for the filtering of hot, dust-laden gases with the assistance of hollow filter elements, which are arranged in groups within a filter housing (1), wherein each filter group is connected by way of a discharge duct (9) and a pure gas duct (11) with a pure gas collecting duct (21) arranged outside the filter housing (1) and the discharge ducts (9) are led out of the filter housing (1) singly, characterised thereby that outside the filter housing (1) a blocking element (13) is arranged in each discharge duct (9) and a measuring device for determining the pure gas conditions is arranged in each discharge duct (9) and/or pure gas duct (11).

2. Device according to claim 1, characterised thereby that the measuring device consists of an apparatus (15), which is arranged in the discharge duct (9) and/or pure gas duct (11), for determining the volume flow and a measuring duct (16) leading to an apparatus (17) for determining the pressure difference is connected to the discharge duct (9) and/or pure gas duct (11) at both sides of the apparatus (15).

3. Device according to claim 1, characterised thereby that the measuring device consists of a dust measuring apparatus (19), which is arranged in the discharge duct (9) and/or pure gas duct (11), for determining the dust content of the pure gas.

4. Device according to claim 1, characterised thereby that a pressure measuring location (20) for determining the dynamic pressure of the pure gas is arranged behind the filter elements in the flow direction.

5. Device according to one of claims 1 to 4, characterised thereby that the blocking element (13) is controlled by way of the measuring device for determining the pure gas conditions.

6. Device according to claims 1 to 5, characterised thereby that several measuring devices based on different measurement principles are arranged in the feed duct (9) and/or pure gas duct (11) and are connected with the blocking element (13) by way of a selector circuit.

## Revendications

1. Dispositif de filtrage de gaz chauds chargés en poussière, à l'aide d'éléments filtrants creux disposés en groupes à l'intérieur d'un carter de filtre (1), chaque groupe de filtres étant relié, par l'intermédiaire d'une conduite d'évacuation (9) et d'une conduite de gaz épurés (11), à une conduite collectrice de gaz épurés (21) disposée à l'extérieur du carter de filtre (1), les conduites d'évacuation (9) sortant chacune du carter de filtre, caractérisé en ce que, à l'extérieur du carter de filtre (1), est disposé dans chaque conduite d'évacuation (9) un dispositif de fermeture (13) et, dans chaque conduite d'évacuation (9) et/ou de conduite de gaz épuré (11), un disPositif de mesure conçu pour déterminer les caractéristiques des gaz épurés.

2. Dispositif selon la revendication 1, caractérisé en ce que le dispositif de mesure est constitué d'un appareil (15) disposé dans la conduite d'évacuation (9) et/ou dans la conduite des gaz épuré (11), en vue de déterminer le volume débité et en ce que, des deux côtés de l'appareil (15), est raccordée à la conduite d'évacuation (9) et/ou à la conduite de gaz épurés (11) une conduite de mesure (16) menant à un appareil (17) conçu pour déterminer la différence de pression.

3. Dispositif selon la revendication 1, caractérisé en ce que le dispositif de mesure est constitué d'un appareil de mesure des poussières (19), disposé dans la conduite d'évacuation (9) et/ou dans la conduite de gaz épurés (11), en vue de déterminer la teneur en poussière des gaz épurés.

4. Dispositif selon la revendication 1, caractérisé en ce que, dans le sens de l'écoulement, en aval des éléments filtrants est disposé un manomètre de mesure de pression (20) destiné à déterminer la pression dynamique des gaz épurés.

5. Dispositif selon l'une des revendications 1 à 4, caractérisé en ce que le dispositif de fermeture (13) est commandé par l'intermédiaire du dispositif de mesure conçu pour déterminer les caractéristiques des gaz épurés.

6. Dispositif selon les revendications 1 à 5, caractérisé en ce que plusieurs dispositifs de mesure, reposant sur des principes de mesure différents sont disposés dans la conduite d'amenée (9) et/ou la conduite de gaz épurés (11) et sont reliés au dispositif de fermeture (13) par l'intermédiaire d'un branchement ou d'un circuit de sélection.
